# EUROPÄISCHE PATENTANMELDUNG

(11) **EP 4 541 608 A1**
(43) Veröffentlichungstag der Anmeldung: **23.04.2025**
(21) Anmeldenummer: 24205342.9
(22) Anmeldetag: 08.10.2024
(51) Int. Cl.: B60G 7/00

(54) **ACHSLENKER**

(30) Priorität: 17.10.2023 DE 102023128425
(71) Anmelder: Karlsruher Institut für Technologie, 76131 Karlsruhe (DE)
(72) Erfinder: Weitz, Fabian, 76133 Karlsruhe (DE); Debnar, Christian, 76846 Hauenstein (DE)

(57) **Zusammenfassung**

Achslenker für eine Radaufhängung eines Fahrzeugs, umfassend einen Achslenkergrundkörper **(1)** mit mindestens einem ersten Anlenkungspunkt **(2)** zu einem Fahrzeugkörper und mindestens einem zweiten Anlenkungspunkt **(3)** zu einer relativ zu dem Fahrzeugkörper schwenkbaren Fahrwerkskomponente, wobei der Achslenkergrundkörper Fluidleitungen **(4, 10)** zwischen dem mindestens ersten und dem mindestens zweiten Anlenkungspunkt aufweist, wobei die Fluidleitungen alleinig mechanisch tragende Teile des Achslenkergrundkörpers zumindest in einem Abschnitt zwischen dem mindestens ersten und dem mindestens zweiten Anlenkungspunkt sind und die Fluidleitungen nur durch eine Komponente des Achslenkergrundkörpers begrenzt sind.

## Beschreibung

Die Erfindung betrifft einen Achslenker, insbesondere einen Dreieckslenker oder Trapezlenker für eine Radaufhängung eines Fahrzeugs, insbesondere eines Kraftfahrzeugs gemäß dem ersten Patentanspruch.

Achslenker sind für schwenkbare Aufhängungen von Fahrwerkskomponenten in der Fahrzeugtechnik hinlänglich bekannt. Sie stellen eine über Gelenke schwenkbare Radaufhängung an einen Fahrzeugkörper insbesondere eines Kraftfahrzeugs, Anhängers, Fahrrads oder eines Fahrwerks z.B. eines Flugzeugs oder einer Fördereinrichtung dar. Üblicherweise übernehmen Achslenker in einem Fahrwerk nur Führungsaufgaben, d.h. es erfolgt eine Trennung der Radführung von einer Federung oder Dämpfung, die in einem Fahrwerk durch separate Feder- oder Dämpfungselemente gewährleistet sind. Wesentliches Merkmal eines Achslenkers umfasst die Schwenkbarkeit eines jeweils geführten Rades, wobei die Komponenten eines Achslenkers oder der Radaufhängung über Anlenkungspunkte schwenk- und/oder drehbar miteinander verbunden sind.

Zentrales Element eines Achslenkers ist das Achslenkergrundelement, eine einstückige oder zusammengesetzte, aber insgesamt steife Komponente, das auf einer Seite über mindestens einen ersten Anlenkungspunkt eine mechanisch schwenkbare Verbindung zum Fahrzeugkörper einerseits und über mindesten einen zweiten Anlenkungspunkt zu einer relativ zu dem Fahrzeugkörper schwenk- oder drehbaren Fahrwerkskomponente andererseits aufweist. Geläufig sind in der Fahrzeugtechnik insbesondere Stablenker (üblicherweise jeweils einen ersten und einen zweiten Anlenkungspunkte), Dreieckslenker (üblicherweise jeweils zwei erste und einen zweiten Anlenkungspunkte) und Trapezlenker (üblicherweise jeweils zwei erste und zwei zweite Anlenkungspunkte) .

Insbesondere bei hochfrequent oszillierenden Fahrwerkskomponenten wie z.B. bei Sport- und Rennwagen oder im Geländewagenbereich ist man stets bestrebt die bewegte Masse der Fahrwerkskomponenten wie die des Achslenkers zu reduzieren. Klassische Achslenkerkonzepte im Fahrzeugbereich unter Nutzung von Schmiede- oder Druckgussteilen oder auch dickwandige Blechumformteile stoßen mit zunehmender Beschleunigung und der mit diesen quadratisch anwachsenden Trägheitskräfte dabei schnell an ihre Grenzen. Alternativen bieten bekannte Leichtbaukonzepte für Achslenker auf der Basis von Hohlkammerprofilen aus leichten Werkstoffen (z.B. aus Aluminium, Titan, Kunststoffen) oder mit dünnen Wandstärken (z.B. aus Stahlblech), aber auch generativ herstellbare Belastungsoptimierte Bauteile.

DE 197 38 249 A1 zeigt beispielhaft eine Kraftfahrzeugachse mit einem Lenker für die Radaufhängung als Hohlprofil, welches durch eingesetzte Rohre weiter versteift ist. Die Rohre dienen zudem als Führungen für Kabel und/oder für Leitungen.

Auch DE 20 2017 100 165 U1 offenbart einen Querlenker für eine Radaufhängung eines Fahrzeugs mit einer radseitigen und einer aufbauseitigen Anbindungsstruktur und einer diese verbindende Verbindungsstruktur (Achslenkergrundkörper), bei der die Verbindungsstruktur und/oder wenigstens eine der Anbindungsstrukturen durch ein generatives Fertigungsverfahren, vorzugsweise aus einem Metall oder einer Metalllegierung hergestellt ist.

Ferner ist es im Fahrzeugbereich üblich, hydraulische Leitungen (Fluidleitungen) und/oder elektrische Leiterbahnen (Kabel) zwischen Radaufhängung und Fahrzeugkörper am Achslenker zu führen oder zu befestigen.

DE 10 2019 109 177 A1 schlägt bespielhaft einen Achslenker mit einer Leitungsführung im Achslenkergrundkörper vor. Die Leitungsführung umfasst insbesondere elektrische Leitungen, aber mit Leitungen für Kühlflüssigkeit auch Fluidleitungen. Für die Herstellung des Achslenkers mit den Leitungsführungen wird u.A. ein additives Herstellungsverfahren offenbart, mit denen ein weitgehend hohlraumfreies einheitliches Bauteil herstellbar ist.

Auch bei einem autonom fahrenden, elektrischen Fahrzeug muss zur Reduzierung des Wendekreises und des Platzbedarfs beim Parken und Rangieren, sowohl große Lenkwinkel als auch gegensinniges Einschlagen der lenkbaren Räder möglich sein. Auch hier ist es von Vorteil, wenn das Gewicht so gering wie möglich ist, um die ungefederten Massen so gering wie möglich zu halten und so auch die Reichweite des Fahrzeuges nicht zu beeinträchtigen. Insbesondere beim Einsatz von Radnabenmotoren sind zudem zahlreiche platzaufwendige Leitungen zum Rad erforderlich, was den Schwenkraum der Räder limitiert.

Davon ausgehend liegt eine **Aufgabe** der Erfindung darin, einen Achslenker mit einer reduzierten beweglichen Masse so zu gestalten, dass er sich für größere Lenkausschläge besonders eignet.

Eine weitere Aufgabe liegt darin einen Achslenker für ein bauraum- und gewichtsoptimales Fahrwerk mit Zusatzfunktionalitäten darzustellen.

Die Aufgabe wird mit einem Achslenker mit den Merkmalen aus Anspruch 1 gelöst. Vorteilhafte Ausführungsformen und Ausgestaltungen werden in den Unteransprüchen wiedergegeben.

Zur Lösung der Aufgabe wird ein Achslenker für eine Radaufhängung eines Fahrzeugs, umfassend einen Achslenkergrundkörper mit mindestens einem ersten Anlenkungspunkt zu einem Fahrzeugkörper und mindestens einem zweiten Anlenkungspunkt zu einer relativ zu dem Fahrzeugkörper schwenkbaren Fahrwerkskomponente vorgeschlagen. Der Achslenkergrundkörper weist hierzu zumindest Fluidleitungen, vorzugsweise auch elektrische Leitungen wie Leiterbahnen oder Sensoren zwischen dem mindestens ersten und dem mindestens zweiten Anlenkungspunkt auf.

Wesentlich ist, dass die Fluidleitungen dabei mechanisch tragende Teile des Achslenkergrundkörpers bilden, zumindest in einem Abschnitt zwischen dem mindestens ersten und dem mindestens zweiten Anlenkungspunkt. Es wird also nicht nur eine bauliche Integration von Leitungen im Achslenker vorgeschlagen, sondern auch deren konstruktive Einbindung als tragende Struktur mit Berücksichtigung zur Festigkeit des gesamten Achslenkers. Die Leitungen sind Teil der tragenden Struktur und gehen in die Topologieoptimierung der Bauteile ein.

Vorzugsweise sind im Achslenkergrundkörper Kavitäten, Bohrungen oder/und Kanäle vorgesehen, die als Fluidleitung dienen. Dabei bildet das die Kavitäten, Bohrungen oder/und Kanäle unmittelbar angrenzende Material des Achslenkergrundkörpers die Fluidleitungswandung, die für jede Leitung einstückig ist, d.h. nur aus durch eine Komponente des Achslenkergrundkörpers gebildet wird und sich nicht aus mehreren Komponenten zusammensetzt. Jede Fluidleitung wird dabei nur durch eine Komponente des Achslenkergrundkörpers begrenzt. Weiter bevorzugt besteht der Achslenkergrundkörper nur aus einer Komponente, in der nicht nur alle Fluidleitungen eingearbeitet sind, sondern bevorzugt auch elektrische Leitungen mit eingebunden werden. Weiter bevorzugt wird ein solcher Achslenkergrundkörper durch ein generatives Herstellungsverfahren wie z.B. mittels eines additiven Druckverfahrens aufgebaut und angefertigt. Dabei werden Achslenkerlagerkomponenten, optional auch weitere Komponenten wie Anschlusskomponenten, elektrische Leitungen, Sensoren oder Aktoren vorzugsweise als fertige Bauteile während der additiven Fertigung eingesetzt oder mit eingedruckt.

Die doppelte Funktion einer Fluidleitung als Leitung und als tragendes Bauteil ermöglicht in vorteilhafter Weise eine Gewichtsreduzierung des Achslenkergrundkörpers und damit eine Reduzierung der schwingenden Masse. Entsprechendes gilt auch für die die konzeptionelle Einbindung von elektrischen Leitungen als tragende Strukturen in den Achslenkergrundkörper.

Die Fluidleitungen dienen der Übertragung von Fluiden zwischen dem Fahrzeugkörper und der über den Achslenker relativ zu dem Fahrzeugkörper schwenkbaren Fahrwerkskomponente, die elektrischen Leitungen der Übertragung von elektrischer Energie und/ oder elektrischen Signalen. Zu den vorgenannten schwenkbaren Fahrwerkskomponenten zählen nicht nur die Räder mit Radlagerungen, sondern auch Radbremssysteme einschließlich an diese angebundener elektrischer Mess- und Regelungssysteme (z.B. ABS, ASR, Beschleunigungsaufnehmer für die Regelung und Abstimmung der Achslagerfederung und -dämpfung etc.) und - im Falle von elektrisch getriebenen Fahrzeugen - elektromechanische Wandler wie Elektromotoren, vorzugsweise Radnabenmotoren, oder elektrodynamische Bremssysteme.

Folglich dienen die Fluidleitungen im Achslenker vorzugsweise als hydraulische Bremsleitungsabschnitte, aber auch als Teil eines Kühlmittelkreislaufs vorzugsweise für die vorgenannten Bremssysteme und/oder Radnabenmotoren. Entsprechend ihrer Verwendung fließen durch diese Leitungen ein vorzugsweise kontinuierlicher Flüssigkeitsstrom (z.B. von Temperierungsmittel) oder die Flüssigkeit in den Leitungen dient einer Druckübertragung (z.B. bei hydraulischen Bremsleitungen).

Elektrische Leitungen dienen entweder der Übertragung von hohen Leistungen (insbesondere bei einer Ansteuerung der vorgenannten elektromagnetischen Wandler) oder von elektrischen Signalen mit geringen Leistungsstärken. Insbesondere die Übertragung von hohen elektrischen Leistungen erfordert einen entsprechenden Mindestquerschnitt der elektrischen Leitungen und/oder eine wirksame Kühlung der Leitungen, dann vorzugsweise über eine entsprechende thermische Anbindung an eine vorgenannte Fluidleitung für einen kontinuierlicher Flüssigkeitsstrom aus Temperierungsmitteln. Gegenüber den druckführenden Fluidleitungen erfordert ein kontinuierlicher Flüssigkeitsstrom keine Auslegung auf hohe Fluiddrücke. Eine bevorzugte Ausgestaltung sieht daher vor, die Fluidleitung, vorzugsweise die Fluidleitungswandung für die Temperierung ganz oder teilweise als elektrische Leitung zu nutzen oder, alternativ, die elektrische Leitung direkt in der Fluidleitung zu führen.

Elektrische Leitungen, die lediglich der Signalübertragung dienen, bedürfen dagegen keine vergrößerten Leitungsquerschnitte oder Kühlung.

Vorzugsweise werden die Achslenker zumindest abschnittsweise zwischen dem mindestens ersten und dem mindestens zweiten Anlenkungspunkt nur durch die Fluidleitungen, vorzugsweise Flüssigkeitsleitungen wie insbesondere Bremsleitungen, gebildet. Die Fluidleitungen stellen damit zumindest in diesen Bereichen die alleinigen tragenden Teile des Achslenkers und damit der Radaufhängung dar, was wiederum geringere Achslenkermassen ermöglicht damit die schwingenden Massen reduziert. Der hydraulische Innendruck wie z.B. der Bremspedaldruck in den Fluidleitungen trägt zu einer Erhöhung der Knickfestigkeit und der Steifigkeit der Fluidleitungen und damit des Achslenkers bei. Beiträge der Leitungen zur Festigkeit wie stützende Effekte durch Innendruck werden ausgenutzt.

Eine bevorzugte Ausführungsform des Achslenkers sieht vor, die Fluidleitungen zumindest in dem Abschnitt zwischen dem mindestens ersten und dem mindestens zweiten Anlenkungspunkt als Überdruckleitungen mit einem runden Querschnitt, vorzugsweise als Rohrleitungen auszugestalten. Die Leitungen und damit auch die nach außen hin auf die Innenwandungen der Leitungen wirkenden Kräfte bilden sich damit rotationssymmetrisch aus. Sind zudem die Leitungswandungen vorzugsweise über den Umfang gleich dick (d.h. ebenfalls rotationssymmetrisch), liegen runde rotationssymmetrische Rohrleitungen vor. Ein anliegender Innendruck bewirkt dann in vorteilhafter Weise nicht nur rotationssymmetrisch radial nach außen hin auf die Innenwandungen wirkende Kräfte, sondern auch ein in jeder Richtung über den Umfang gleiches Ausdehnungsverhalten der Leitungen. Eine elastische Verformung erfolgt ohne eine Vorzugsrichtung.

Eine weitere bevorzugte Ausführungsform des Achslenkers sieht vor, die Fluidleitungen innen und/oder außen eine Strukturierung, vorzugsweise mit Rippen, Fachwerkelemente oder eine Ummantelung der Fluidleitungen, vorzugsweise eine nicht tragende Beschichtung, auszugestalten. Die Strukturierung der Fluidleitungen erfolgt vorzugsweise vollständig, alternativ nur abschnittsweise, zumindest im Bereich des Achslenkergrundkörpers. Insbesondere Rippen oder Fachwerkelemente vergrößern einerseits die Oberfläche der Fluidleitungen und ermöglicht so einen verbesserten Wärmeübergang vom Fluid auf die Leitung, bildet aber andererseits auch eine zusätzliche Versteifung und damit Stärkung der Leitungswandungen an sich und damit des gesamten Achslenkers. Eine verbesserte Wärmeübertragung bewirkt wiederum einen besseren Temperaturausgleich zwischen Fluid und Fluidleitung als Teil der Achslenkermasse und damit eine Verringerung der thermisch bedingten Auswirkungen von möglichen Temperaturwechseln im Fluid. Andererseits stellt insbesondere eine Innenrippung der Fluidleitungen eine mechanische Verstärkung der Leitungswandungen dar, womit sich wiederum in vorteilhafter Weise die Wandungsstärken der Fluidleitungen reduzieren ließen.

Eine besonders bevorzugte Ausgestaltung sieht axial zur Fluidleitung orientierte Rippen auf, vorzugsweise im Innern der Fluidleitung in Strömungsrichtung.

Eine optionale Ummantelung als Strukturierung ist vorzugsweise als mechanische und/oder chemische Schutzschicht ausgestaltet. Die Ummantelung ist Teil des Achslenkergrundkörpers. Sie ist zumindest im Bereich um die Fluidleitung vorzugsweise nicht tragend ausgelegt. Weiter bevorzugt ist diese zu den mindestens ersten und dem mindestens zweiten Anlenkungspunkt hinweisend als tragende alleinige Verbindung der Fluidleitung zu den Anlenkungspunkten oder als unterstützend mittragendes Element zwischen einer direkten Verbindung zwischen Fluidleitung und den jeweiligen Anlenkungspunkt hin gestaltet. Die genannte direkte Verbindung zwischen Fluidleitung und den jeweiligen Anlenkungspunkt wird dabei vorzugsweise durch eine tragende Flanschverbindung oder durch eine entsprechende Ausgestaltung der die Anlenkungspunkte enthaltenden Komponenten mit Aufnahme für einen angrenzenden Fluidleitungsabschnitt vorgesehen. Die Ummantelung besteht vorzugsweise aus einem dauerelastischen Material wie Gummi, einem Kunststoff oder einen Schaumstoff.

Eine weitere bevorzugte Ausgestaltung der vorgenannten Ummantelung sieht eine vergrößerte Dicke oder eine andere Materialverstärkung insbesondere in den Bereichen auf, die beim Betrieb des Fahrzeugs einer auftretenden Anströmung von Fahrtluft und/oder vom Rad aufgewirbelten Gegenständen besonders exponiert sind. Dies sind insbesondere die in Fahrtrichtung und nach unten zum Boden weisenden Oberflächen des Achslenkergrundkörpers.

Eine weitere bevorzugte Ausgestaltung der vorgenannten Ummantelung sieht eingebundene fluidische oder elektrische Komponenten wie Leitungen, Aktoren und/oder Sensoren vor.

Eine bevorzugte Ausführungsform des Achslenkers sieht alternativ oder weiterhin vor, den Achslenkergrundkörper mit elektrischen Leitungen zwischen dem mindestens ersten und dem mindestens zweiten Anlenkungspunkt zu versehen, vorzugsweise in diesen zu integrieren. Auch hier liegt eine Idee darin, die elektrische Leitungen als mechanisch belastbare Komponenten des Achskörpers nutzbar zu machen und somit durch eine kombinierte Nutzung separate Komponenten und damit schwingende Masse so weit wie möglich einzusparen. Die elektrischen Leitungen umfassen dabei grundsätzlich nicht nur die stromführenden Versorgungsleitungen (Leistungskabel) für einen elektrischen Antrieb oder Aktorik, vorzugsweise für ein Fahrzeugrad oder eine aktive Schwingungsdämpfung, sondern auch informationsführende Leiterbahnen, vorzugsweise für Messignale oder Ansteuersignale für eine Anbindung von Sensoren bzw. einer Steuerungselektronik für die vorgenannten Antriebe oder Aktorik.

Eine weitere bevorzugte Ausführungsform des Achslenkers sieht vor, in den Achslenkergrundkörper Temperierungsmittel wie elektrische Widerstandselemente oder Peltierelemente einerseits oder Sensoren wie Thermoelemente, Positions-, Dehnungs- oder Beschleunigungsaufnehmer zu integrieren und bevorzugt an die vorgenannten elektrischen Leitungen im Achslenkergrundkörper anzuschließen.

Eine weitere bevorzugte Ausführungsform des Achslenkers sieht vor, den Achslenkergrundkörper zusammen mit den Fluidleitungen und/oder den elektrischen Leiterbahnen mittels eines generativen Fertigungsverfahren (additive Fertigung) herzustellen. Dabei wird vorzugsweise auch eine Miteinbeziehung der vorgenannten elektrischen Leiterbahnen, Aktoren und Sensoren in den Fertigungsprozess vorgeschlagen, entweder durch Einsetzen von Komponenten oder Systemen oder durch generative Fertigung auch dieser im Rahmen der Gesamtherstellung.

Weiter bevorzugt werden alle Leitungen mittels eines 3D Druckverfahren direkt bei der Fertigung ins Bauteil gedruckt. Bei der Geometrieoptimierung und Auslegung vor der Fertigung werden alle Leitungen berücksichtigt, was es ermöglicht Leitungen verschiedener Durchmesser und ohne nachträgliches Durchführen direkt zu integrieren.

Eine weitere bevorzugte Ausführungsform des Achslenkers sieht ein in den Achslenkergrundkörper integriertes Traggelenk vor.

Vorzugsweise wird eine gemeinsame Herstellung von Querlenker und Traggelenk in einem Aufbau vorgeschlagen. Durch einen Schmiernippel wäre auch nachträglich Schmierfett einbringbar. Das würde bedeuten, dass die Montage deutlich vereinfacht wird, was Zeit und Kosten spart. Der Vorteil: Sobald geeignete Prozessparameter für Traggelenke gefunden werden, können diese auf eine große Fahrzeugbandbreite angewandt werden (auch für kleine Stückzahlen interessant, beispielsweise für historische Fahrzeuge, deren Ersatzteile nicht mehr produziert werden).

Durch die Einbindung von stoff-, energie- und informationsführenden Leitungen in die Bauteile der Radaufhängung, insbesondere im Achslenkergrundkörper ergibt sich zudem eine enorme Platzersparnis in einem Radhaus eines Fahrzeugs. Dies ermöglicht sehr große Lenkwinkel und somit eine Erhöhung der Manövrierbarkeit des Fahrzeuges insbesondere auf engem Raum. Durch die Integration aller Leitungen wird zudem die Montage erleichtert und notwendige Nacharbeiten bei der Führung und Fixierung dieser Leitungen in der Radaufhängung vermieden. Mit entsprechender geometrischer Gestaltung, insbesondere der vorgenannten Strukturierung der Leitungen ist auch eine Kühlung der Leitungen realisierbar. Vorteilhaft ist hier die vorgeschlagene additive Fertigung zumindest des Achslenkergrundkörpers und die damit verbundene hohe Flexibilität in der Gestaltung der Geometrie der Komponente.

Die Erfindung wird anhand von nachfolgenden Ausführungsbeispielen, den folgenden Figuren und Beschreibungen näher erläutert. Alle dargestellten Merkmale und deren Kombinationen sind nicht nur auf diese Ausführungsbeispiele und deren Ausgestaltungen begrenzt. Vielmehr sollen diese stellvertretend für weitere mögliche, aber nicht explizit als Ausführungsbeispiele dargestellte weitere Ausgestaltungen kombinierbar angesehen werden. Es zeigen
**Fig.1** eine schematische perspektivische Ansicht eines ersten Ausführungsbeispiels eines Achslenkergrundkörpers eines Achslenkers,
**Fig.2a** **und b** schematische Schnittansichten des in **Fig.1** dargestellten Ausführungsbeispiels sowie
**Fig.3** eine perspektivische Gesamtansicht einer Radaufhängung mit elektrischem Antrieb und Achslenker mit einem Achslenkergrundkörper gemäß **Fig.1****.**

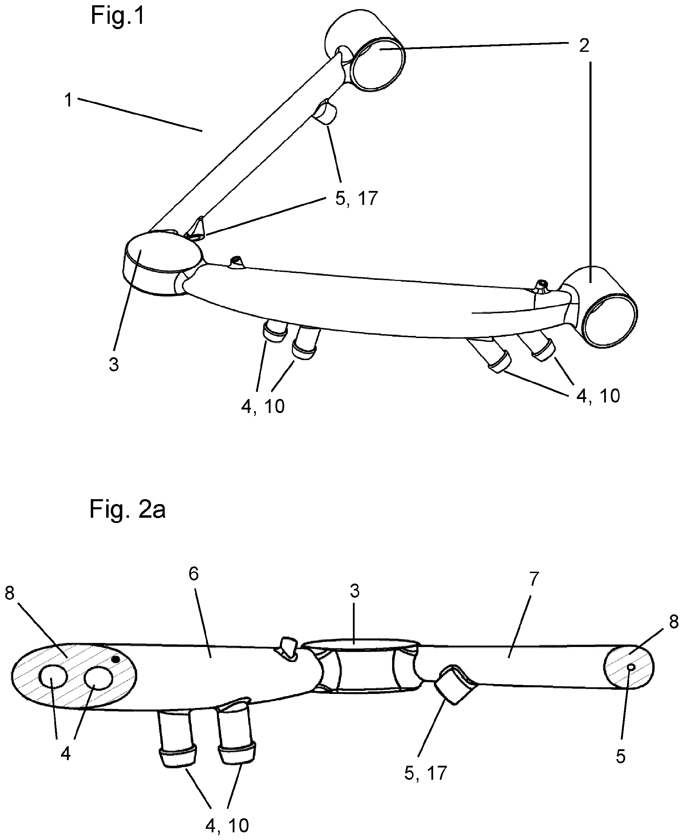

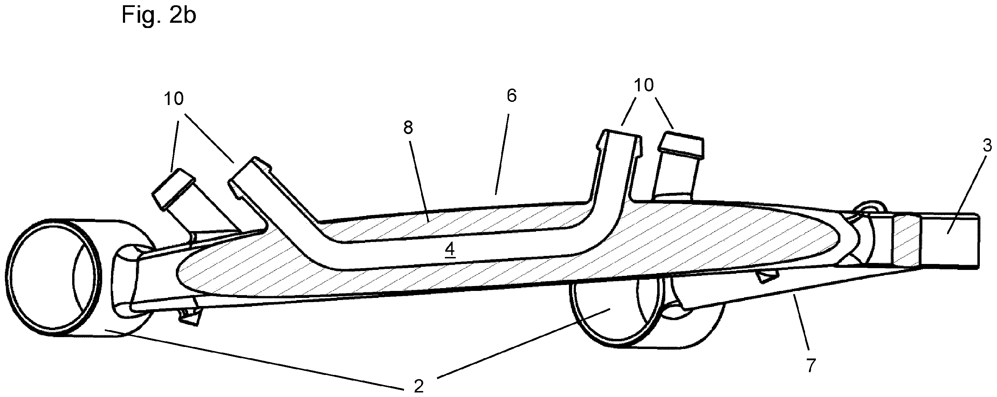

Der in **Fig.1** und **Fig.2a** **und b** dargestellte Achslenkergrundkörper **1** eines Achslenkers für eine Radaufhängung eines Fahrzeugs umfasst mindestens einem (im Beispiel zwei) ersten Anlenkungspunkt **2** zu einem nicht weiter dargestellten Fahrzeugkörper und mindestens einem (im Beispiel genau einen) zweiten Anlenkungspunkt **3** zu einer relativ zu dem Fahrzeugkörper schwenkbaren Fahrwerkskomponente. Die bevorzugt sphärischen Lagerflächen für die dreh- und schwenkbare Aufnahme und gleitenden Führung eines Kugelelements sind im zweiten Anlenkungspunkt nicht weiter dargestellt. Die beiden ersten Anlenkungspunkte sind für die Realisierung einer Schwenklagerung als zwei fluchtende Rohrstücke gestaltet. Der zweite Anlenkungspunkt dagegen ist als flacher Zylinder dargestellt; vorzugsweise dient dieser der Aufnahme von sphärischen Lagerflächen für die dreh- und schwenkbare Aufnahme und gleitenden Führung eines Kugelelements eines Radlagergehäuses. Ferner weist der Achslenkergrundkörper Fluidleitungen **4** und elektrische Leitungen **5** zwischen dem mindestens ersten und dem mindestens zweiten Anlenkungspunkt auf. Wesentlich ist dabei die Einbindung der Leitungen in den Achslenkergrundkörper als mechanisch tragende Teile, vorzugsweise als abschnittsweise alleinig tragende Teile. Im Beispiel werden die Wandungen der fluidischen Leitungen durch den Achslenkergrundkörper gebildet, womit auch die zwischen den zu den jeweiligen Anlenkungspunkten weisenden Enden der Leitungen fest an diese angebunden sind. Das Material des Achslenkergrundkörpers bildet einerseits die Wandung der Fluidleitungen und schließt andererseits unmittelbar an die elektrischen Leitungen an.

In den beiden Schnittansichten **Fig.2a** **und b** wird die Anordnung der Leitungen im Achslenkergrundkörper deutlich.

**Fig.2a** zeigt beispielhaft einen Querschnitt durch die beiden Streben **6** und **7** des Achslenkergrundkörpers mit den Fluidleitungen **4** und eingebundene elektrische Leitung **5,** die wiederum vom Material **8** des Achslenkergrundkörpers umgeben sind. Der Querschnitt wird im Beispiel ausschließlich durch den tragenden Achslenkergrundkörper gebildet, in den die beiden dargestellten Fluidleitungen und die elektrische Leitung eingebunden sind.

**Fig.2b** zeigt beispielhaft einen Längsschnitt durch einen Strebe **6** des Achslenkergrundkörpers entlang einer Fluidleitung **4,** die unmittelbar an das Material **8** des Achslenkergrundkörpers angrenzt. Fluidleitungen **4** sowie ein elektrischer Leiter **5** werden abschnittsweise in die Streben des Achslenkergrundkörpers integriert. Die Leitungsanschlüsse **10** sind bereits konstruktiv im Beispiel im Achslenkergrundkörper **1** angeformt, wodurch sich die Anzahl an benötigten Einzelkomponenten des Achslenkergrundkörpers reduzieren lassen. Die Radien **9** in der Fluidleitung weisen zur Reduzierung von belastungsabhängigen Spannungen im Achslenkergrundkörperstrebe einen Mindestradius auf.

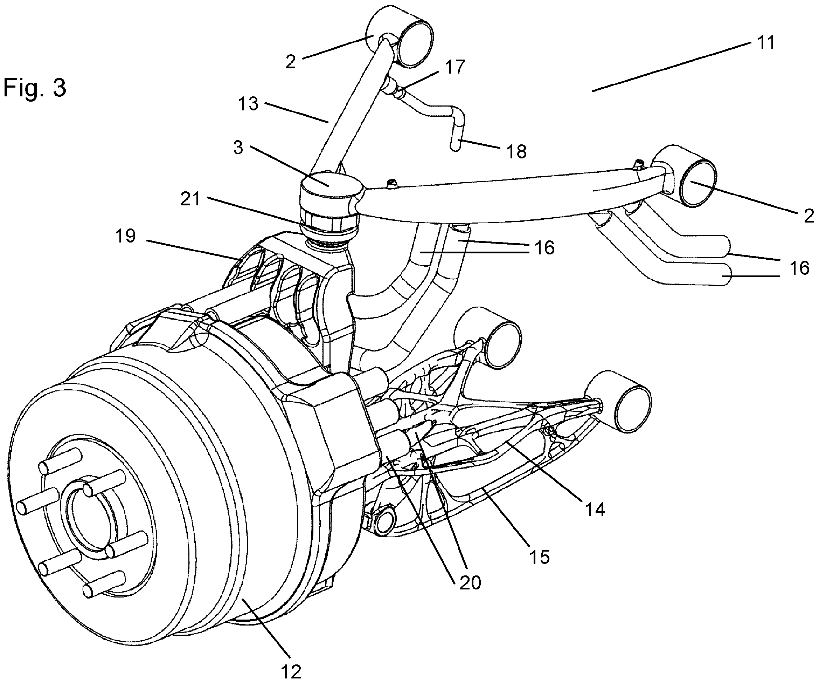

**Fig.3** zeigt eine mögliche Ausführung einer lenkbaren Vorderachsradaufhängung **11** mit über ein Traggelenk schwenkbaren Fahrwerkskomponenten, umfassend einem Radnabenmotor **12** an einem Radlagergehäuse **19.** Ferner sind ein oberer und ein unterer Achslenker **13** bzw. **14** vorgesehen. Beide Achslenker weisen jeweils zwei erste Anlenkungspunkte **2** zu einem nicht weiter dargestellten Fahrzeugkörper und mindestens einem (im Beispiel genau einen) vom Radnabenmotor **12** verdeckten zweiten Anlenkungspunkt zu den relativ zum Fahrzeugkörper vorgenannten schwenkbaren Fahrwerkskomponenten. Beispielhaft am unteren Achslenker **14** sind am Achslenkergrundkörper versteifende, vorzugsweise angeformte Fachwerkelemente **15** vorgesehen. An den Leitungsanschlüssen **10** der der Fluidleitungen sind zudem Schlauchverbindungen **16,** an den Anschlüssen für die elektrischen Leitungen **17** elektrische Kabel **18** angeschlossen.

Auch wenn weitere dargestellte Leitungen **20** separat, d.h. abseits der unabhängig von einem der Achslenkergrundkörper vom Fahrzeugkörper zum Radnabenmotor geführt werden, erkennt man doch den gewonnen Raum im Schwenkbereich für die Radaufhängung. Diese Maßnahme ermöglicht eine geordnete Führung der für den Betrieb des Radnabenmotors benötigten Leitungen. Das Kollisionspotential zwischen Leitungen und dem rotierenden Rad wird aufgrund der abschnittsweisen Leitungsintegration in die Querlenker signifikant reduziert. Grundsätzlich kommt der gewonnene Raum aber auch einem vergrößertem Lenkeinschlag zugute. Die Luftströmung durch den Radkasten bedingt eine Kühlwirkung der Leitungen durch Anströmung auch der Achslenker. Dies wirkt bei elektrischen Leitungen und Komponenten wie Sensoren oder Aktoren deren Überhitzung entgegen. infolge der Kühlwirkung auf die Brems- sowie Kühlflüssigkeit können tendenziell kleinere fahrzeugfeste Kühler verwendet werden, welche üblicherweise eine geringere Masse aufweisen.

Der Einsatz von Additiver Fertigung ermöglicht die Konstruktion von Fahrwerksteilen mit komplexen Bauteilgeometrien und die einstufige Herstellung von Bauteilen mit integrierten Leitungen sowie deren Leitungsanschlüssen. Dadurch wird die benötigte Materialmenge minimiert und die Freigängigkeit des Rades maximiert. Durch die Integration sonst beweglicher Leitungen in die Achslenker wird zusätzlich die Zuverlässigkeit des Gesamtsystems gesteigert.

### Bezugszeichenliste:

- **1**: Achslenkergrundkörper
- **2**: erster Anlenkungspunkt
- **3**: zweiter Anlenkungspunkt
- **4**: Fluidleitung
- **5**: Elektrische Leitung
- **6**: Streben mit Fluidleitung des Achslenkergrundkörpers
- **7**: Strebe mit elektrischer Leitung des Achslenkergrundkörpers
- **8**: Material des Achslenkergrundkörpers
- **9**: Radius der Fluidleitung im Achslenkergrundkörper
- **10**: Anschluss für Fluidleitung
- **11**: lenkbare Vorderachs-Radaufhängung
- **12**: Radnabenmotor
- **13**: oberer Achslenker
- **14**: unterer Achslenker
- **15**: Fachwerkelement
- **16**: Schlauchverbindung
- **17**: Anschluss für elektrische Leitung
- **18**: elektrische Kabel
- **19**: Radlagergehäuse
- **20**: sonstige Leitungen
- **21**: Traggelenk

## Patentansprüche

1. Achslenker für eine Radaufhängung eines Fahrzeugs, umfassend einen Achslenkergrundkörper **(1)** mit mindestens einem ersten Anlenkungspunkt **(2)** zu einem Fahrzeugkörper und mindestens einem zweiten Anlenkungspunkt **(3)** zu einer relativ zu dem Fahrzeugkörper schwenkbaren Fahrwerkskomponente **(12, 19),** wobei der Achslenkergrundkörper Fluidleitungen **(4)** zwischen dem mindestens ersten und dem mindestens zweiten Anlenkungspunkt aufweist,
**dadurch gekennzeichnet, dass**
die Fluidleitungen alleinig mechanisch tragende Teile des Achslenkergrundkörpers zumindest in einem Abschnitt zwischen dem mindestens ersten und dem mindestens zweiten Anlenkungspunkt sind
und
die Fluidleitungen nur durch eine Komponente des Achslenkergrundkörpers begrenzt sind.

2. Achslenker nach Anspruch 1, **dadurch gekennzeichnet, dass** die Fluidleitungen **(4)** durch Kavitäten, Bohrungen oder/und Kanäle im Achslenkergrundkörper gebildet sind.

3. Achslenker nach Anspruch 1 oder 2, **dadurch gekennzeichnet, dass** die Fluidleitungen **(4)** zumindest in dem Abschnitt als Überdruckleitungen mit einem runden Querschnitt versehen sind.

4. Achslenker nach einem der vorgenannten Ansprüche, **dadurch gekennzeichnet, dass** die Fluidleitungen **(4)** innen und/oder außen eine Strukturierung aufweisen.

5. Achslenker nach Anspruch 4, **dadurch gekennzeichnet, dass** die Strukturierung Kühlrippen oder Versteifungsrippen oder Fachwerkelemente oder eine Ummantelung umfassen.

6. Achslenker nach einem der vorgenannten Ansprüche, **dadurch gekennzeichnet, dass** der Achslenkergrundkörper **(1)** elektrische Leitungen **(5)** zwischen dem mindestens ersten und dem mindestens zweiten Anlenkungspunkt **(2)** bzw. **(3)** enthält.

7. Achslenker nach einem der vorgenannten Ansprüche, **dadurch gekennzeichnet, dass** der Achslenkergrundkörper **(1)** integrierte elektrische Widerstandselemente oder Thermoelemente aufweist.

8. Achslenker nach einem der vorgenannten Ansprüche, **dadurch gekennzeichnet, dass** der Achslenkergrundkörper **(1)** zusammen mit den Fluidleitungen **(4)** und/oder den elektrischen Leiterbahnen **(5)** mittels eines generativen Fertigungsverfahren hergestellt oder herstellbar ist.

9. Achslenker nach einem der vorgenannten Ansprüche, **dadurch gekennzeichnet, dass** der Achslenkergrundkörper **(1)** ein integriertes Traggelenk **(21)** aufweist.
